# EUROPEAN PATENT APPLICATION

(11) **EP 4 607 631 A1**
(43) Date of publication of application: **27.08.2025**
(21) Application number: 23913917.3
(22) Date of filing: 03.01.2023
(51) Int. Cl.: H01M 10/04

(54) **WINDING DEVICE AND WINDING METHOD**

(71) Applicant: Contemporary Amperex Technology Co., Limited, Ningde, Fujian 352100 (CN)
(72) Inventor: ZHANG, Xiaowei, Ningde, Fujian 352100 (CN); WEI, Hui, Ningde, Fujian 352100 (CN); ZHANG, Zhan, Ningde, Fujian 352100 (CN); WANG, Zhiwen, Ningde, Fujian 352100 (CN); WEN, Yuqian, Ningde, Fujian 352100 (CN); TANG, Minghao, Ningde, Fujian 352100 (CN); ZHANG, Shengwu, Ningde, Fujian 352100 (CN)
(74) Representative: Ran, Handong
(86) International application number: PCT/CN2023/070146
(87) International publication number: WO 2024/145755

(57) **Abstract**

The present application provides a winding device and a winding method, which allow for efficiently adjusting the circumference of a winding needle. The winding device comprises a winding mechanism used for winding a pole piece so as to form an electrode assembly. The winding mechanism comprises: a winding needle assembly, comprising an inner winding needle and an outer winding needle surrounding the inner winding needle; and a piezoelectric assembly, arranged between the outer winding needle and the inner winding needle and used for controlling the outer winding needle to move relative to the inner winding needle so as to adjust the circumference of the outer winding needle.

## Description

### TECHNICAL FIELD

This application relates to the field of battery technologies, and in particular, to a winding device and a winding method.

### BACKGROUND

**In** the production process of batteries, a winding needle is typically used to wind positive and negative electrode plates to form an electrode assembly. A circumference of the winding needle is closely related to an alignment of tabs of the electrode plates and the dimensions of the electrode assembly, directly affecting the quality of the electrode assembly. Therefore, how to effectively adjust the circumference of the winding needle has become a problem to be solved.

### SUMMARY

This application provides a winding device and a winding method capable of effectively adjusting a circumference of a winding needle.

According to a first aspect, a winding device is provided. The winding device includes a winding mechanism configured to wind an electrode plate to form an electrode assembly. The winding mechanism includes: a winding needle assembly, including an inner winding needle and an outer winding needle surrounding the inner winding needle; and a piezoelectric assembly, disposed between the outer winding needle and the inner winding needle and configured to control the outer winding needle to move relative to the inner winding needle to adjust a circumference of the outer winding needle.

In an embodiment of this application, a piezoelectric assembly is disposed between the inner winding needle and the outer winding needle. A driving voltage of the piezoelectric assembly is adjusted according to a misalignment amount of a tab, so that the piezoelectric assembly can drive the outer winding needle to move relative to the inner winding needle, thereby changing the circumference of the outer winding needle, reducing a misalignment amount of the tab in the subsequent winding process, ensuring the quality of the electrode assembly.

In an embodiment, the outer winding needle includes a first sub-outer needle and a second sub-outer needle disposed opposite each other. The inner winding needle includes a first sub-inner needle and a second sub-inner needle disposed opposite each other. The first sub-outer needle surrounds the first sub-inner needle, and the second sub-outer needle surrounds the second sub-inner needle. The piezoelectric assembly is configured to control the first sub-outer needle and the second sub-outer needle to move in opposite directions to adjust a distance between the first sub-outer needle and the second sub-outer needle.

In this embodiment, the outer winding needle includes a first sub-outer needle and a second sub-outer needle disposed opposite each other. By controlling the first sub-outer needle and the second sub-outer needle to move in opposite directions, the distance between the first sub-outer needle and the second sub-outer needle can be increased or decreased, thereby changing the circumference of the outer winding needle. The operation is simple and easy to implement.

In an embodiment, a movement distance L of each of the first sub-outer needle and the second sub-outer needle and an adjustment amount ΔC of the circumference of the outer winding needle meet: ΔC = K * L, where K is a predetermined coefficient. For example, when the first sub-outer needle and the second sub-outer needle are symmetrical structures, K = 4.

Since the movement distance L of each of the first sub-outer needle and the second sub-outer needle is linearly related to the adjustment amount ΔC of the circumference of the outer winding needle, after determining the adjustment amount ΔC of the required adjustment circumference according to the misalignment amount of the tab, the distance L that the first sub-outer needle and the second sub-outer needle require to move can be obtained. Therefore, a matching driving voltage is utilized to control the piezoelectric assembly to drive the first sub-outer needle and the second sub-outer needle to move by the distance L.

In an embodiment, a misalignment correction amount Cm of a tab in an M-th layer of the electrode assembly meets: Cm = M * ΔC. When correcting a misalignment of the tab, the number of winding layers where the tab is located needs to be considered to obtain an accurate correction amount.

In an embodiment, the first sub-outer needle is fixed to a piezoelectric assembly between the first sub-outer needle and the first sub-inner needle, and the second sub-outer needle is fixed to a piezoelectric assembly between the second sub-outer needle and the second sub-inner needle. In this way, a fixed connection is formed between the first sub-outer needle and the corresponding piezoelectric assembly and between the second sub-outer needle and the corresponding piezoelectric assembly, allowing the first sub-outer needle and the second sub-outer needle to move under the drive of the corresponding piezoelectric assemblies.

In an embodiment, the piezoelectric assembly between the first sub-outer needle and the first sub-inner needle is fixed to the first sub-inner needle, and the piezoelectric assembly between the second sub-outer needle and the second sub-inner needle is fixed to the second sub-inner needle. The piezoelectric assembly can be fixed to the inner winding needle by screws, thereby ensuring the structural reliability of the piezoelectric assembly.

In an embodiment, elastic assembles are respectively connected between the first sub-outer needle and the first sub-inner needle and between the second sub-outer needle and the second sub-inner needle. Before the first sub-outer needle and the second sub-outer needle are subjected to a force applied by the piezoelectric assembly, the elastic assembly can provide a preload force to the first sub-outer needle and the second sub-outer needle to enhance the connection reliability with the piezoelectric assembly. This prevents gaps or relative slippage between the first sub-outer needle and the piezoelectric assembly and between the second sub-outer needle and the piezoelectric assembly after the piezoelectric assembly applies a force to the first sub-outer needle and the second sub-outer needle, thereby ensuring winding accuracy.

In an embodiment, the elastic assembly includes a screw and a spring sleeved on the screw. The end of the screw close to the head is provided with a gasket, and the end of the screw away from the head is provided with a bushing. The spring is used to provide a preload force to the outer winding needle, which is easy to implement and low in cost.

In an embodiment, flat plates are respectively disposed between the first sub-outer needle and the first sub-inner needle and between the second sub-outer needle and the second sub-inner needle. The flat plate is configured to increase an acting area of the piezoelectric assembly on the first sub-outer needle and the second sub-outer needle. This ensures that the force applied to the outer winding needle is more uniform, thereby ensuring the stability of the outer winding needle during movement.

In an embodiment, the winding mechanism further includes: an inner clamping needle, including a first portion surrounded by the first sub-inner needle and a second portion surrounded by the second sub-inner needle. A gap is formed between the first portion and the second portion, and the inner clamping needle is configured to fix a separator passing through the gap. Using the inner clamping needle to fix a starting end of the separator facilitates the winding of the separator.

In an embodiment, multiple winding mechanisms are provided. The multiple winding mechanisms are coaxially arranged and spaced apart and configured to wind multiple electrode plates simultaneously. The multiple winding mechanisms share the same inner winding needle and inner clamping needle. The winding device of this embodiment of this application can simultaneously wind multiple electrode plates, greatly improving production efficiency.

In an embodiment, multiple piezoelectric assemblies in the multiple winding mechanisms are respectively configured to independently adjust the circumferences of multiple outer winding needles in the multiple winding mechanisms. Since the piezoelectric assemblies in the multiple winding mechanisms can be independently controlled, the circumferences of the corresponding outer winding needles can be independently adjusted for respective tab misalignment conditions of the multiple electrode plates, thereby ensuring respective winding accuracy.

In an embodiment, the winding device further includes: an electric slip ring, configured to provide a lead for connecting the piezoelectric assembly to an external circuit. The lead includes an input line and an output line. The input line is configured to connect to the external circuit, and the output line is configured to connect to a wire of the piezoelectric assembly. The external circuit applies a driving voltage to the piezoelectric assembly through the lead and the wire. In this way, the transmission of electrical signals between a fixed structure and a rotating structure is achieved by using the electric slip ring, providing the driving voltage to the piezoelectric assembly.

In an embodiment, the winding mechanism further includes: a displacement monitoring device, configured to monitor a displacement of the outer winding needle to perform closed-loop control of the piezoelectric assembly. Using the displacement monitoring device to detect an actual displacement of the outer winding needle, and based on this, performing closed-loop control of the piezoelectric assembly allows the displacement of the outer winding needle to quickly and accurately reach a target value, ensuring adjustment accuracy.

In an embodiment, the displacement monitoring device includes a displacement sensing piece and a displacement sensor. The displacement sensing piece is fixed to the outer winding needle. The displacement sensor is configured to emit a signal to irradiate the displacement sensing piece and determine a displacement of the outer winding needle according to strength of a signal returned. A non-contact detection of the displacement of the outer winding needle can be achieved by using the displacement sensing piece and the displacement sensor, with high detection accuracy.

In an embodiment, the winding device further includes: a misalignment detection device, configured to detect an actual angle value of a tab of an electrode plate to be wound. A difference between the actual angle value and a standard angle value corresponding to the tab is used to determine the misalignment amount of the tab, enabling the winding mechanism to adjust the circumference of the outer winding needle according to the misalignment amount. The actual angle value is an angle through which the winding mechanism rotates when the tab reaches the winding mechanism. Using the misalignment detection device to detect the angle through which the winding mechanism rotates from a starting position when the tab reaches the winding mechanism can effectively determine a misalignment direction and a misalignment amount of the tab. The circumference of the outer winding needle is then adjusted according to the misalignment amount to reduce the misalignment amount of the tab in the subsequent winding process, ensuring the quality of the electrode assembly.

In an embodiment, the winding device further includes: a thickness detection device, configured to detect a thickness of the electrode plate to be wound and the separator, enabling the winding mechanism to adjust the circumference of the outer winding needle according to the thickness. By detecting the thickness of the electrode plate and the separator, the misalignment direction and the misalignment amount of the tab can be predicted, and the circumference of the outer winding needle can be adjusted according to the misalignment amount, thereby preventing tab misalignment caused by thickness fluctuations of the electrode plate and the separator before and after material replacement, ensuring the quality of the electrode assembly.

According to a second aspect, a winding method is provided. The winding method is configured to control a winding mechanism in the winding device described in the first aspect or any one of embodiments in the first aspect to wind an electrode plate to form an electrode assembly. The winding method includes: obtaining a detection result of the electrode plate; determining adjustment information of an outer winding needle in the winding mechanism according to the detection result, the adjustment information including an adjustment amount and/or adjustment direction of a circumference of the outer winding needle; and determining a driving voltage of a piezoelectric assembly in the winding mechanism according to the adjustment information.

In this embodiment, since the piezoelectric assembly is used to drive the outer winding needle to move relative to an inner winding needle, thereby changing the circumference of the outer winding needle, after determining the adjustment information of the outer winding needle according to the detection result of the electrode plate, the magnitude of the driving voltage to be input to the piezoelectric assembly can be obtained, resulting in the piezoelectric assembly generating strain, driving the outer winding needle to move to change its circumference. In this way, a misalignment amount of the tab can be reduced in the subsequent winding process, ensuring the quality of the electrode assembly.

In an embodiment, a correction amount for a tab in an M-th layer of the electrode assembly is: Cm = M * ΔC, where ΔC is the adjustment amount of the circumference of the outer winding needle, and Cm is the correction amount. When correcting the misalignment of the tab, the number of winding layers where the tab is located needs to be considered to obtain an accurate correction amount.

In an embodiment, the winding method further includes: obtaining a displacement of the outer winding needle; and adjusting the driving voltage according to a difference between the displacement and a target value until the displacement of the outer winding needle equals the target value. Detecting the actual displacement of the outer winding needle, and based on this, performing closed-loop control of the piezoelectric assembly allows the displacement of the outer winding needle to quickly and accurately reach the target value, ensuring adjustment accuracy.

In an embodiment, the detection result includes: a misalignment amount of the tab; and/or a thickness of the electrode plate and a separator. A misalignment direction and a misalignment amount of the tab can be directly detected, and the circumference of the outer winding needle can be adjusted according to the detection result to reduce the misalignment amount of the tab in the subsequent winding process. Alternatively, by detecting the thickness of the electrode plate and the separator, the misalignment direction and the misalignment amount of the tab can be predicted, and the circumference of the outer winding needle can be adjusted according to the misalignment amount, thereby preventing tab misalignment caused by thickness fluctuations of the electrode plate and the separator before and after material replacement.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a three-dimensional schematic diagram of a winding device according to an embodiment of this application.
FIG. 2 is a schematic diagram of a circumference change of an outer winding needle.
FIG. 3 is a top view schematic diagram of a winding device according to an embodiment of this application.
FIG. 4 is a schematic cross-sectional view of a winding device according to an embodiment of this application.
FIG. 5 is a schematic cross-sectional view of a winding device according to an embodiment of this application.
FIG. 6 is a three-dimensional schematic diagram of a winding device according to an embodiment of this application.
FIG. 7 is a front view schematic diagram of a winding device according to an embodiment of this application.
FIG. 8 is a schematic diagram of a misalignment detection device.
FIG. 9 is a schematic diagram of a thickness detection device.
FIG. 10 is a schematic flowchart of a winding method according to an embodiment of this application.
FIG. 11 is a flowchart of a possible specific implementation of the winding method shown in FIG. 10.

Reference signs: 100 - winding device; 1 - winding mechanism; 10 - winding needle assembly; 20 - piezoelectric assembly; 11 - inner winding needle; 12 - outer winding needle; 12-1 - first sub-outer needle; 12-2 - second sub-outer needle; 11-1 - first sub-inner needle; 11-2 - second sub-inner needle; 40 - elastic assembly; 41 - screw; 42 - spring; 43 - gasket; 44 - bushing; 50 - flat plate; 60 - inner clamping needle; 61 - first portion of inner clamping needle; 62 - second portion of inner clamping needle; 71 - winding needle base; 72 - support base; 80 - electric slip ring; 81 - input line of electric slip ring; 82 - output line of electric slip ring; 83-1 - wire of piezoelectric assembly; 83-2 - wire of piezoelectric assembly; 90 - displacement monitoring device; 91 - displacement sensing piece; 92 - displacement sensor; 93 - mounting plate of displacement sensor; 2 - misalignment detection device; 3 - thickness detection device; 1001 - electrode plate; 1002 - electrode plate; 1003 - separator; 1004 - separator.

### DESCRIPTION OF EMBODIMENTS

The following further describes implementations of this application in detail with reference to the accompanying drawings and embodiments. The detailed description and the accompanying drawings of the following embodiments are intended to illustrate the principle of this application, rather than to limit the scope of this application, meaning this application is not limited to the embodiments described herein.

In the description of this application, it should be noted that unless otherwise stated, "multiple" means two or more; and the terms "upper", "lower", "left", "right", "inside", "outside", and the like are merely for ease and brevity of description of this application rather than indicating or implying that the apparatuses or elements mentioned must have specific orientations or be constructed and manipulated according to specific orientations, and therefore shall not be construed as any limitations on this application. In addition, the terms "first", "second", "third", and the like are merely intended for a purpose of description, and shall not be understood as any indication or implication of relative importance. "Perpendicular" is not strictly perpendicular, but within the allowable range of error. "Parallel" is not strictly parallel, but within the allowable range of error.

The words of orientation appearing in the following description all are directions shown in the drawings, and do not limit the specific structure of this disclosure. In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand the specific meanings of foregoing terms in this disclosure as appropriate to specific situations.

A battery in the embodiments of this application refers to a single physical module including one or more battery cells for providing a higher voltage and capacity. For example, the battery mentioned in this application may include a battery module, a battery pack, or the like. The battery typically includes a box for packaging one or more battery cells. The box can prevent liquids or other foreign matter from affecting the charging or discharging of the battery cells.

The battery cell may include an electrode assembly and an electrolyte. The electrode assembly, also referred to as a cell, includes a positive electrode plate, a negative electrode plate, and a separator. The battery cell works mainly depending on migration of metal ions between the positive electrode plate and the negative electrode plate. The positive electrode plate includes a positive electrode current collector and a positive electrode active substance layer. The positive electrode active substance layer is applied to a surface of the positive electrode current collector, and a current collector uncoated with the positive electrode active substance layer protrudes from the current collector coated with the positive electrode active substance layer and serves as a positive electrode tab. Taking a lithium-ion battery as an example, the positive electrode current collector may be made of aluminum, and the positive electrode active material may be lithium cobaltate, lithium iron phosphate, ternary lithium, lithium manganate, or the like. The negative electrode plate includes a negative electrode current collector and a negative electrode active substance layer. The negative electrode active substance layer is applied to a surface of the negative electrode current collector, and a current collector uncoated with the negative electrode active substance layer protrudes from the current collector coated with the negative electrode active substance layer and serves as a negative electrode tab. The negative electrode current collector may be made of copper, and the negative electrode active substance may be graphite, carbon, silicon, or the like. To allow a large current to pass through without any fusing, multiple positive electrode tabs are provided and stacked together, and multiple negative electrode tabs are provided and stacked together. The following description takes the separator as an example, where the separator may be made of polypropylene (polypropylene, PP), polyethylene (polyethylene, PE), or the like. In addition, the electrode assembly may be a wound structure or a stacked structure. However, the embodiments of this application are not limited thereto.

As the thickness of the electrode assembly increases and the number of winding layers increases, factors such as variations in the thickness of the electrode plate or separator, fluctuations in the tension of the electrode plate during the winding process, and differences in the die-cutting dimensions of the tabs can easily cause tab misalignment issues during the winding process of the electrode plate, thereby affecting the quality of the electrode assembly. Therefore, a circumference of the winding needle needs to be effectively adjusted to reduce the misalignment amount of the tabs.

To this end, an embodiment of this application provides a winding device aimed at solving the problem of how to effectively adjust the circumference of the winding needle. The circumference of the winding needle is adjusted by controlling the radial movement of the winding needle through a piezoelectric assembly, thereby reducing the misalignment amount of the tabs.

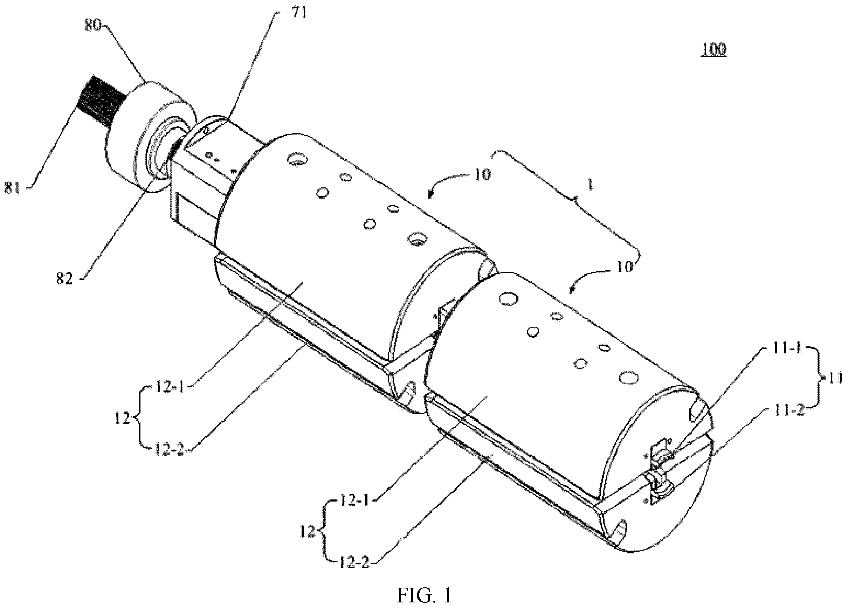

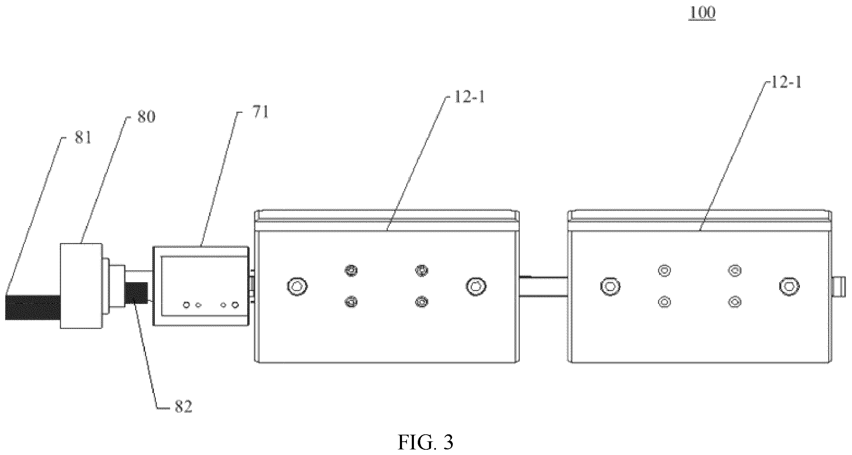

FIG. 1 and FIG. 3 are schematic diagrams of a winding device according to an embodiment of this application. FIG. 1 is a three-dimensional schematic diagram of the winding device, and FIG. 3 is a top view schematic diagram of the winding device. As shown in FIG. 1 and FIG. 3, the winding device 100 includes a winding mechanism 1. The winding mechanism 1 is configured to wind an electrode plate to form an electrode assembly. The winding mechanism 1 includes a winding needle assembly 10 and a piezoelectric assembly 20. The winding needle assembly 10 includes an inner winding needle 11 and an outer winding needle 12, where the outer winding needle 12 surrounds the inner winding needle 11. The piezoelectric assembly 20 is disposed between the outer winding needle 12 and the inner winding needle 11 and is configured to control the outer winding needle 12 to move relative to the inner winding needle 11, that is, to control a distance between the outer winding needle 12 and the inner winding needle 11 to adjust a circumference of the outer winding needle 12.

The shapes of the inner winding needle 11 and the outer winding needle 12 in the winding needle assembly 10 include, but are not limited to, circular, elliptical, polygonal with an edge number greater than three, polygonal with a smooth end angle transition, flat shapes, and the like. The materials of the inner winding needle 11 and the outer winding needle 12 include, but are not limited to, carbon steel, carbon structural steel, high-quality structural steel, carbon tool steel, free-cutting structural steel, alloy steel, ordinary low-alloy steel, alloy steel for engineering structures, alloy steel for mechanical structures, alloy structural steel, alloy tool steel, high-speed tool steel, and the like.

The piezoelectric assembly 20 may include, for example, several piezoelectric crystals, and may also include a corresponding mechanical amplifier such as a deformation amplifier in the form of a hinge (not shown in the figure), to amplify an elongation and contraction of the piezoelectric crystals. When a driving voltage is input to the piezoelectric crystals, assuming a generated electric field strength is E, the piezoelectric crystals produce a strain x, where x = dt * E, dt being an inverse piezoelectric coefficient. The piezoelectric crystals expand or contract along the direction of the electric field. The direction of the electric field is set as a radial direction of the winding needle assembly 10, a greater electric field strength E received by the piezoelectric crystals indicates a greater strain x and a greater movement distance of the outer winding needle. Based on this, a suitable driving voltage can be output according to the detected misalignment direction and misalignment amount of the tab, allowing the piezoelectric assembly 20 to drive the outer winding needle to move radially to change the circumference of the outer winding needle 12, thereby reducing the misalignment amount of the tab. In this embodiment of this application, the piezoelectric assembly 20 is configured to control the movement of the outer winding needle 12, allowing the adjustment accuracy of the circumference of the outer winding needle 12 by the winding mechanism 1 to reach the micron level.

It can be seen that by disposing the piezoelectric assembly 20 between the inner winding needle 11 and the outer winding needle 12 and adjusting a driving voltage of the piezoelectric assembly 20 according to the misalignment amount of the tab, so that the piezoelectric assembly 20 can drive the outer winding needle 12 to move relative to the inner winding needle 11, thereby changing the circumference of the outer winding needle 12, reducing the misalignment amount of the tab in the subsequent winding process, ensuring the quality of the electrode assembly. Since the movement of the outer winding needle 12 utilizes the piezoelectric assembly 20 rather than a complex mechanical structure, the risk of particles caused by mechanical friction falling into the electrode assembly and piercing the separator is prevented, ensuring the safety of the electrode assembly.

The number of winding mechanisms 1 in the winding device of the embodiment of this application can be set to multiple. The multiple winding mechanisms 1 are configured to wind multiple electrode plates simultaneously to form multiple electrode assemblies, greatly improving production efficiency and facilitating subsequent maintenance and replacement for a certain winding mechanism 1. The multiple winding mechanisms 1 are coaxially arranged and spaced apart to ensure rotational consistency of the multiple winding mechanisms 1 during winding.

The multiple winding mechanisms 1 can share the same inner winding needle 11, meaning that multiple outer winding needles 12 are disposed on an outer side of the inner winding needle 11, and the inner winding needle 11 has the capability of winding multiple electrode plates simultaneously.

The circumferences of the outer winding needles 12 in the multiple winding mechanisms 1 can be the same or different. That is, the piezoelectric assemblies 20 in the multiple winding mechanisms 1 can be independently controlled. The multiple piezoelectric assemblies 20 in the multiple winding mechanisms 1 are respectively configured to independently adjust the circumferences of the multiple outer winding needles 12 in the multiple winding mechanisms 1. Therefore, the circumferences of the corresponding outer winding needles 12 can be adjusted according to the respective tab misalignment conditions of the multiple electrode plates. In addition, core components of the winding mechanism 1 are small in size, and the movements of the multiple winding mechanisms 1 during their respective winding processes are minimal, preventing mutual interference between the multiple winding mechanisms 1 and ensuring their respective winding accuracy. As shown in FIG. 1 and FIG. 3, two winding mechanisms 1 are used as an example. The two winding mechanisms 1 are coaxially arranged and spaced apart, and capable of independently winding two sets of electrode plates to form two electrode assemblies.

In an embodiment, as shown in FIG. 1, the outer winding needle 12 includes a first sub-outer needle 12-1 and a second sub-outer needle 12-2 disposed opposite each other. The inner winding needle 11 includes a first sub-inner needle 11-1 and a second sub-inner needle 11-2 disposed opposite each other. The first sub-outer needle 12-1 surrounds the first sub-inner needle 11-1, and the second sub-outer needle 12-2 surrounds the second sub-inner needle 11-2. The first sub-outer needle 12-1 and the first sub-inner needle 11-1 can be referred to as one set of sub-needles, and the second sub-outer needle 12-2 and the second sub-inner needle 11-2 can be referred to as another set of sub-needles. Each set of sub-needles is provided with a piezoelectric assembly 20, and the piezoelectric assemblies 20 in each set of sub-needles can be independently controlled. The piezoelectric assembly 20 is configured to control the first sub-outer needle 12-1 and the second sub-outer needle 12-2 to move in opposite directions to adjust a distance between the first sub-outer needle 12-1 and the second sub-outer needle 12-2, for example, to increase or decrease the distance between the first sub-outer needle 12-1 and the second sub-outer needle 12-2.

For example, a piezoelectric assembly 20 between the first sub-outer needle 12-1 and the first sub-inner needle 11-1 controls the first sub-outer needle 12-1 to move away from an axis relative to the first sub-inner needle 11-1, and a piezoelectric assembly 20 between the second sub-outer needle 12-2 and the second sub-inner needle 11-2 controls the second sub-outer needle 12-2 to move away from the axis relative to the second sub-inner needle 11-2. In this case, the distance between the first sub-outer needle 12-1 and the second sub-outer needle 12-2 increases, and the circumference of the outer winding needle 12 increases. Conversely, the piezoelectric assembly 20 between the first sub-outer needle 12-1 and the first sub-inner needle 11-1 controls the first sub-outer needle 12-1 to move toward the axis relative to the first sub-inner needle 11-1, and the piezoelectric assembly 20 between the second sub-outer needle 12-2 and the second sub-inner needle 11-2 controls the second sub-outer needle 12-2 to move toward the axis relative to the second sub-inner needle 11-2. In this case, the distance between the first sub-outer needle 12-1 and the second sub-outer needle 12-2 decreases, and the circumference of the outer winding needle 12 decreases.

It can be seen that by controlling the first sub-outer needle 12-1 and the second sub-outer needle 12-2 to move in opposite directions, the distance between the first sub-outer needle 12-1 and the second sub-outer needle 12-2 can be increased or decreased, thereby changing the circumference of the outer winding needle 12. The operation is simple and easy to implement.

For the stable operation of the winding mechanism 1, the two sets of sub-needles can adopt a symmetrical structure. Several piezoelectric crystals are symmetrically installed between the sub-inner needle and the sub-outer needle in each set, and the piezoelectric crystals in the two sets of sub-needles are symmetrically arranged. For example, one piezoelectric crystal or two piezoelectric crystals are installed between the sub-inner needle and the sub-outer needle in each set.

A movement distance L of each of the first sub-outer needle 12-1 and the second sub-outer needle 12-2 and an adjustment amount ΔC of the circumference of the outer winding needle 12 can meet: ΔC = K * L, where K is a predetermined coefficient. When the outer winding needle 12 is a circular, elliptical, or diamond-shaped winding needle with a symmetrical structure, K = 4, that is, ΔC = 4 * L.

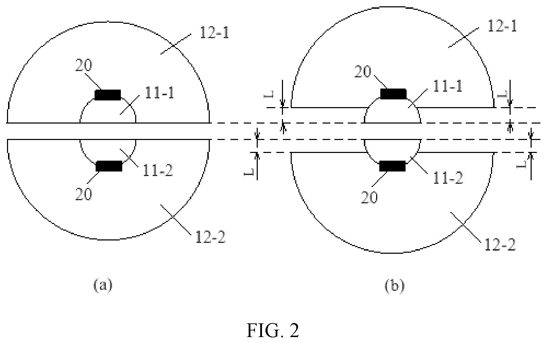

For example, as shown in FIG. 2, the outer winding needle 12 is circular with a symmetrical structure. The first sub-outer needle 12-1 and the second sub-outer needle 12-2 are symmetrically arranged semicircles, and the positions of the first sub-inner needle 11-1 and the second sub-inner needle 11-2 are fixed. Assuming that (a) in FIG. 2 is the initial state and (b) is the adjusted state, and the piezoelectric assembly 20 drives the first sub-outer needle 12-1 to move a distance L relative to the first sub-inner needle 11-1, and the piezoelectric assembly 20 drives the second sub-outer needle 12-2 to move a distance L relative to the second sub-inner needle 11-2, the adjustment amount ΔC of the circumference of the outer winding needle 12 is equivalent to an increase of 4 * L.

Since the movement distance L of each of the first sub-outer needle 12-1 and the second sub-outer needle 12-2 is linearly related to the adjustment amount ΔC of the circumference of the outer winding needle 12, after determining the direction and adjustment amount ΔC of the circumference adjustment according to the misalignment direction and the misalignment amount of the tab, the distance L that the first sub-outer needle 12-1 and the second sub-outer needle 12-2 require to move can be obtained. Then, the suitable driving voltage is output according to the piezoelectric characteristics of the piezoelectric crystal, and the piezoelectric assembly 20 drives the first sub-outer needle 12-1 and the second sub-outer needle 12-2 to move, causing each of the first sub-outer needle 12-1 and the second sub-outer needle 12-2 to move the distance L.

The misalignment amount of the tab is typically accumulated layer by layer. When correcting a misalignment of the tab, the number of winding layers where the tab is located needs to be considered to obtain an accurate correction amount. In an embodiment, a misalignment correction amount Cm of the tab in an M-th layer meets: Cm = M * ΔC, where M ranges from 1 to N. For example, assuming the number of layers of the electrode assembly is N, during the winding process, when the misalignment amount of the tab in the M-th layer exceeds a predetermined threshold, 1 ≤ M ≤N, the circumference of the outer winding needle 12 needs to be adjusted. In practice, the misalignment amount of the tab in the M-th layer relative to the tab in the first layer is the cumulative misalignment amount of the tabs in the layers before the M-th layer, where the tab in each layer produces a certain misalignment relative to the tab in the previous layer. Therefore, the correction amount Cm can be determined according to the misalignment amount of the tab in the M-th layer relative to the tab in the first layer, where the correction amount Cm is typically equal to this misalignment amount. The adjustment amount ΔC is calculated according to Cm = M * ΔC, and the circumference of the outer winding needle 12 is adjusted according to ΔC. Thus, in the subsequent winding process, the positions of the tabs in the layers after the M-th layer are the same, and the tabs in each layer are no longer misaligned relative to the tab in the previous layer.

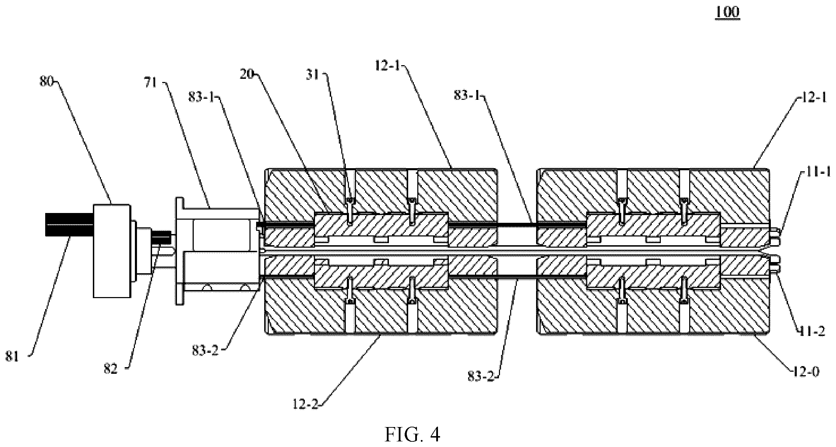

In an embodiment, as shown in FIG. 4, the first sub-outer needle 12-1 is fixed to the piezoelectric assembly 20 between the first sub-outer needle 12-1 and the first sub-inner needle 11-1, and the second sub-outer needle 12-2 is fixed to the piezoelectric assembly 20 between the second sub-outer needle 12-2 and the second sub-inner needle 11-2. In this way, a fixed connection is formed between the first sub-outer needle 12-1 and the corresponding piezoelectric assembly 20 and between the second sub-outer needle 12-2 and the corresponding piezoelectric assembly 20, allowing the first sub-outer needle 12-1 and the second sub-outer needle 12-2 to move under the drive of the respective piezoelectric assemblies 20. For example, as shown in FIG. 4, the first sub-outer needle 12-1 can be fixed to the corresponding piezoelectric assembly 20 using a fastener such as a screw 31, and/or the second sub-outer needle 12-2 can be fixed to the corresponding piezoelectric assembly 20 using a fastener such as a screw 31.

In an embodiment, the piezoelectric assembly 20 between the first sub-outer needle 12-1 and the first sub-inner needle 11-1 can be fixed to the first sub-inner needle 11-1 by screws, and the piezoelectric assembly 20 between the second sub-outer needle 12-2 and the second sub-inner needle 11-2 can be fixed to the second sub-inner needle 11-2 by screws. In this way, the piezoelectric assembly 20 is fixed to the inner winding needle 11 by screws, ensuring the structural reliability of the piezoelectric assembly 20. For example, the corresponding piezoelectric assemblies 20 can be fixed to the first sub-inner needle 11-1 and the second sub-inner needle 11-2, respectively, using fasteners such as screws.

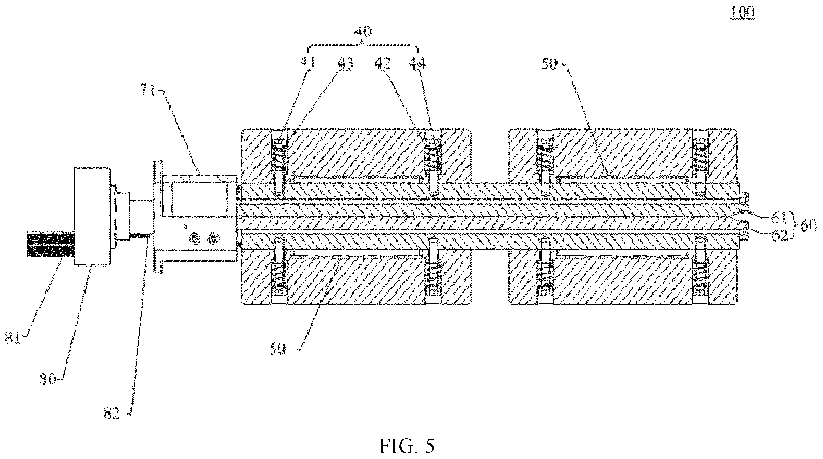

In an embodiment, as shown in FIG. 5, an elastic assembly 40 is connected between the first sub-outer needle 12-1 and the first sub-inner needle 11-1 and between the second sub-outer needle 12-2 and the second sub-inner needle 11-2, respectively. Before the first sub-outer needle 12-1 and the second sub-outer needle 12-2 are subjected to a force applied by the piezoelectric assembly 20, the elastic assembly 40 can provide a preload force to the first sub-outer needle 12-1 and the second sub-outer needle 12-2 to enhance the connection reliability with the piezoelectric assembly 20. This prevents gaps or relative slippage between the first sub-outer needle 12-1 and the piezoelectric assembly 20 and between the second sub-outer needle 12-2 and the piezoelectric assembly 20 after the piezoelectric assembly 20 applies a force to the first sub-outer needle 12-1 and the second sub-outer needle 12-2, thereby ensuring winding accuracy.

The elastic assembly 40 can be implemented in various ways. For example, a spring can be used to provide a preload force to the outer winding needle 12, which is easy to implement and low in cost. As shown in FIG. 5, the elastic assembly 40 includes a screw 41 and a spring 42 sleeved on the screw 41. One end of the screw 41 close to a head is provided with a gasket 43, such as a plastic gasket 43, and one end of the screw 41 away from the head is provided with a bushing 44. During assembly, the upper gasket 43 and spring 42 are sequentially sleeved onto the screw 41, then the lower bushing 44 is sleeved onto the screw 41, and finally, the screw 41 is tightened and fixed to the first sub-inner needle 11-1 and the second sub-inner needle 11-2.

In an embodiment, a flat plate 50, also referred to as an active plate 50, is disposed between the first sub-outer needle 12-1 and the first sub-inner needle 11-1 and between the second sub-outer needle 12-2 and the second sub-inner needle 11-2. The flat plate 50 is configured to increase an acting area of the piezoelectric assembly 20 on the first sub-outer needle 12-1 and the second sub-outer needle 12-2.

For example, as shown in FIG. 5, the flat plate 50 is disposed between the first sub-outer needle 12-1 and the corresponding piezoelectric assembly 20 and between the second sub-outer needle 12-2 and the corresponding piezoelectric assembly 20. The flat plate 50 is used to transmit the force applied by the piezoelectric assembly 20 to the first sub-outer needle 12-1 and the second sub-outer needle 12-2, increasing a pushing area of the piezoelectric assembly 20 on the outer winding needle 12, allowing the force applied to the first sub-outer needle 12-1 and the second sub-outer needle 12-2 to be more uniform, ensuring the stability of the first sub-outer needle 12-1 and the second sub-outer needle 12-2 during movement.

In an embodiment, as shown in FIG. 5, the winding mechanism 1 further includes an inner clamping needle 60. Multiple winding mechanisms 1 can share the same inner clamping needle 60. The inner clamping needle 60 includes a first portion 61 surrounded by the first sub-inner needle 11-1 and a second portion 62 surrounded by the second sub-inner needle 11-2. A gap is formed between the first portion 61 and the second portion 62, and the inner clamping needle 60 is configured to fix a separator passing through the gap, facilitating the winding of the separator.

Typically, before winding the electrode plate and the separator, the separator is passed through the gap between the first portion 61 and the second portion 62 of the inner clamping needle 60. The first portion 61 and the second portion 62 apply a clamping force to the separator to fix a starting end of the separator, facilitating the winding of the separator. After winding the separator for several turns, the electrode plate is fed in and wound together with the electrode plate using friction.

As shown in FIG. 1 to FIG. 6, the winding device 100 further includes a winding needle base 71 and a support base 72. Two ends of the inner winding needle 11 are respectively disposed on the winding needle base 71 and the support base 72. It can be understood that the inner clamping needle 60, the inner winding needle 11, and the outer winding needle 12 are coaxially arranged. However, only the inner winding needle 11 does not move radially. Both the inner clamping needle 60 and the outer winding needle 12 can move radially relative to the inner winding needle 11 to achieve the functions of clamping the separator and adjusting its circumference, respectively.

In an embodiment, as shown in FIG. 1 to FIG. 6, the winding device 100 further includes an electric slip ring 80, configured to provide a lead for connecting the piezoelectric assembly 20 to an external circuit (not shown in the figure). The external circuit inputs a driving voltage to the piezoelectric assembly 20 through the lead. In this way, the electric slip ring 80 enables the transmission of electrical signals between a fixed structure and a rotating structure, providing the driving voltage to the piezoelectric assembly 20 and preventing the lead from twisting and pulling during the winding process.

For example, as shown in FIG. 4, the electric slip ring 80 is mounted to the winding needle base 71, for example, by being fixed to a rotating assembly (not shown in the figure) using screws. The lead of the electric slip ring 80 includes an input line 81 and an output line 82. The input line 81 is configured to connect to the external circuit, and the output line 82 is configured to connect to the piezoelectric assembly 20. The piezoelectric assemblies 20 in the two sets of sub-needles of the winding mechanism 1 respectively lead out a wire 83-1 and a wire 83-2 connected to the output line 82 of the electric slip ring 80. The external circuit inputs the driving voltage to the piezoelectric assembly 20 through the lead of the electric slip ring 80 and the wires of the piezoelectric assembly 20.

In an embodiment, the winding mechanism 1 further includes a displacement monitoring device 90, configured to monitor a displacement of the outer winding needle 12 to perform closed-loop control of the piezoelectric assembly 20.

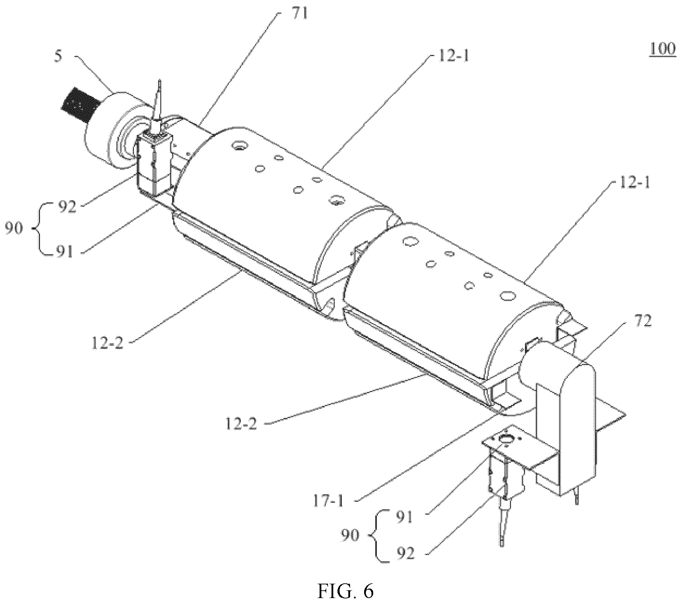

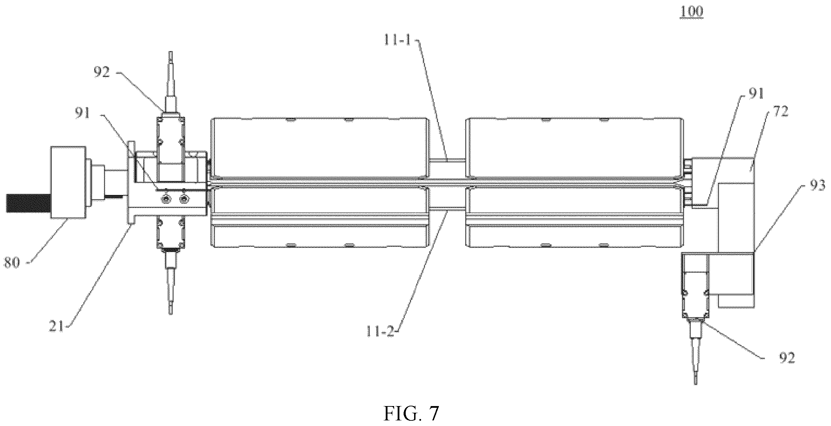

For example, as shown in FIG. 6 and FIG. 7, FIG. 6 is a three-dimensional schematic diagram of the winding device 100, and FIG. 7 is a front view schematic diagram of the winding device 100. The displacement monitoring device 90 includes a displacement sensing piece 91 and a displacement sensor 92. The displacement sensing piece 91 is fixed to the outer winding needle 12. The displacement sensor 92 is configured to emit a signal to irradiate the displacement sensing piece 91 and determine a displacement of the outer winding needle 12 according to strength of a signal returned. As shown in FIG. 6 and FIG. 7, the displacement sensor 92 of the winding mechanism 1 on a left side can be fixed to two sides of the winding needle base 71 using fasteners such as screws, and the displacement sensing piece 91 is fixed to the first sub-outer needle 12-1 and the second sub-outer needle 12-2 using fasteners such as screws. The displacement sensor 92 of the winding mechanism 1 on a right side can be fixed to a mounting plate 93 using fasteners such as screws, the mounting plate 93 is fixed to two sides of the support base 72, and the displacement sensing piece 91 is fixed to the first sub-outer needle 12-1 and the second sub-outer needle 12-2 using fasteners such as screws. A non-contact detection of the displacement of the outer winding needle 12 can be achieved by using the displacement sensing piece 91 and the displacement sensor 92, with high detection accuracy.

In this way, using the displacement monitoring device 90 to detect the displacement of the outer winding needle 12 and performing closed-loop control of the piezoelectric assembly 20 based on the detected displacement, that is, performing closed-loop adjustment on its driving voltage until the displacement of the outer winding needle 12 quickly and accurately reaches a target value, thereby further allowing the circumference of the outer winding needle 12 to be precisely increased or decreased.

In an embodiment, the winding device 100 further includes a misalignment detection device 2, configured to detect an actual angle value of a tab of an electrode plate to be wound. A difference between the actual angle value and a standard angle value corresponding to the tab is used to determine the misalignment amount of the tab, enabling the winding mechanism to adjust the circumference of the outer winding needle 12 according to the misalignment amount. The actual angle value is an angle through which the winding mechanism 1 rotates when the tab reaches the winding mechanism 1.

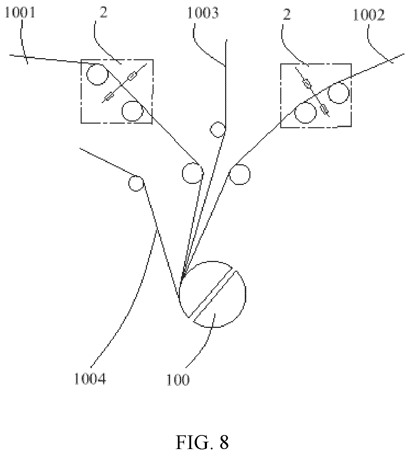

For example, as shown in FIG. 8, an electrode plate 1001, an electrode plate 1002, a separator 1003, and a separator 1004 are wound together. Misalignment detection devices 2 are respectively provided for the electrode plate 1001 and the electrode plate 1002. The misalignment detection device 2 can be disposed upstream of the winding device 100 and is configured to sense the tabs that are about to be wound onto the winding mechanism 1 after the winding is started, so as to record the time and number of tabs entering the winding mechanism 1. The misalignment detection device 2, for example, may be a photoelectric sensor. When the tab blocks a light signal emitted by the photoelectric sensor, preventing the light signal from being transmitted, the photoelectric sensor detects the tab and sends a signal to a processing module. The processing module determines the misalignment amount according to the difference between the actual angle value of the tab and the corresponding standard angle value. The actual angle value of the tab, for example, is the angle through which the winding mechanism 1 rotates from a timing zero point to the time when the tab is detected to be about to be wound onto the winding mechanism 1.

In this way, using the misalignment detection device 2 to detect the angle through which the winding mechanism 1 rotates from a starting position when the tab reaches the winding mechanism 1 can effectively determine the misalignment direction and the misalignment amount of the tab. The circumference of the outer winding needle 12 is then adjusted according to the misalignment amount to reduce the misalignment amount of the tab in the subsequent winding process, ensuring the quality of the electrode assembly.

In an embodiment, the winding device 100 further includes a thickness detection device 3, configured to detect a thickness of the electrode plate to be wound and the separator, enabling the winding mechanism 1 to adjust the circumference of the outer winding needle 12 according to the thickness.

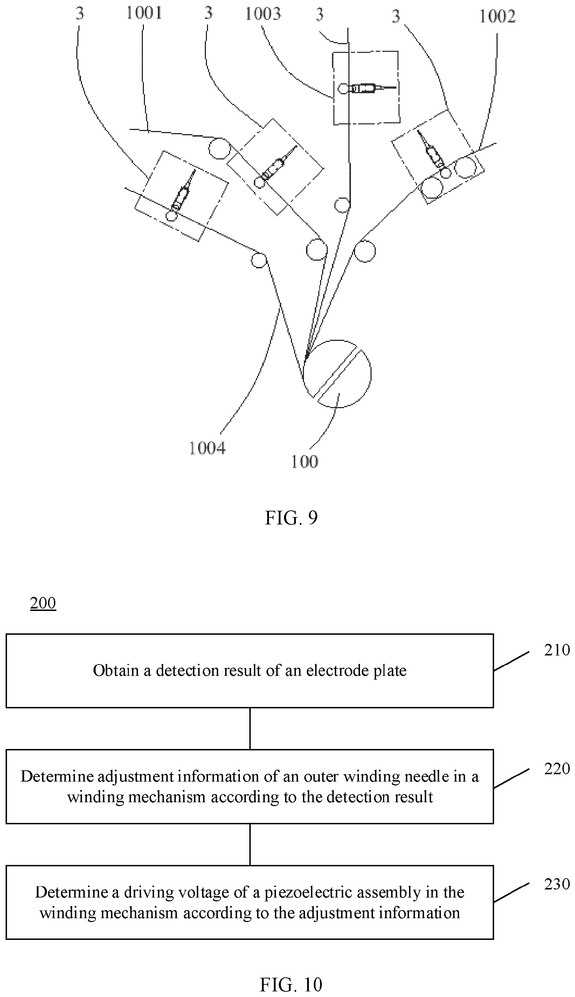

For example, as shown in FIG. 9, thickness detection devices 3 are respectively provided for the electrode plate 1001, the electrode plate 1002, the separator 1003, and the separator 1004. Assuming the detected thickness values of the electrode plate 1001, the electrode plate 1002, the separator 1003, and the separator 1004 are T1, T2, T3, and T4, respectively, a total thickness T = T1 + T2 + T3 + T4. The winding mechanism 1 adjusts the circumference of the outer winding needle 12 according to the change in the thickness T.

In this way, by detecting the thickness of the electrode plate and the separator, the misalignment direction and the misalignment amount of the tab can be predicted, and the circumference of the outer winding needle 12 can be adjusted according to the misalignment amount, thereby preventing tab misalignment caused by thickness fluctuations of the electrode plate and the separator before and after material replacement, ensuring the quality of the electrode assembly.

This application also provides a winding method. The winding method 200 is configured to control the winding mechanism 1 in the winding device 100 described in any of the foregoing embodiments to wind the electrode plate to form an electrode assembly. The winding method 200, for example, can be executed by a processing module, and the processing module, for example, can be connected to the input line 81 of the electric slip ring 80 or an external circuit. As shown in FIG. 10, the winding method 200 includes some or all of the following steps.

Step 210: Obtain a detection result of the electrode plate.

Step 220: Determine adjustment information of the outer winding needle 12 in the winding mechanism 1 according to the detection result, where the adjustment information, for example, includes an adjustment amount and/or adjustment direction of the circumference of the outer winding needle 12.

Step 230: Determine a driving voltage of the piezoelectric assembly 20 in the winding mechanism 1 according to the adjustment information.

Since the piezoelectric assembly is used to drive the outer winding needle 12 to move relative to the inner winding needle 11, thereby changing the circumference of the outer winding needle 12, after determining the adjustment information of the outer winding needle 12 according to the detection result of the electrode plate, the magnitude of the driving voltage to be input to the piezoelectric assembly 20 can be obtained, resulting in the piezoelectric assembly 20 generating strain or deformation, driving the outer winding needle 12 to move relative to the inner winding needle 11, thereby changing the circumference of the outer winding needle 12. In this way, the misalignment amount of the tab can be reduced in the subsequent winding process, ensuring the quality of the electrode assembly.

The detection result in step 210, for example, may include: a misalignment amount of the tab; or the thickness of the electrode plate and the separator. In other words, the misalignment direction and the misalignment amount of the tab can be directly detected, and the circumference of the outer winding needle 12 can be adjusted based on the detection result to reduce the misalignment amount of the tab in the subsequent winding process. Alternatively, by detecting the thickness of the electrode plate and the separator, the misalignment direction and the misalignment amount of the tab can be predicted, and the circumference of the outer winding needle 12 can be adjusted according to the misalignment amount, thereby preventing tab misalignment caused by thickness fluctuations of the electrode plate and the separator before and after material replacement.

The misalignment amount of the tab is typically accumulated layer by layer. When correcting the misalignment of the tab, the number of winding layers where the tab is located needs to be considered to obtain an accurate correction amount. In an embodiment, a correction amount for a tab in an M-th layer of the electrode assembly is: Cm = M * ΔC, where ΔC is the adjustment amount of the circumference of the outer winding needle, and Cm is the correction amount.

In an embodiment, the winding method 200 further includes: obtaining a displacement of the outer winding needle 12; and adjusting the driving voltage of the piezoelectric assembly 20 according to a difference between the displacement and a target value until the displacement of the outer winding needle 12 equals the target value. Detecting the actual displacement of the outer winding needle 12, and based on this, performing closed-loop control of the piezoelectric assembly 20 allows the displacement of the outer winding needle 12 to quickly and accurately reach the target value, ensuring adjustment accuracy.

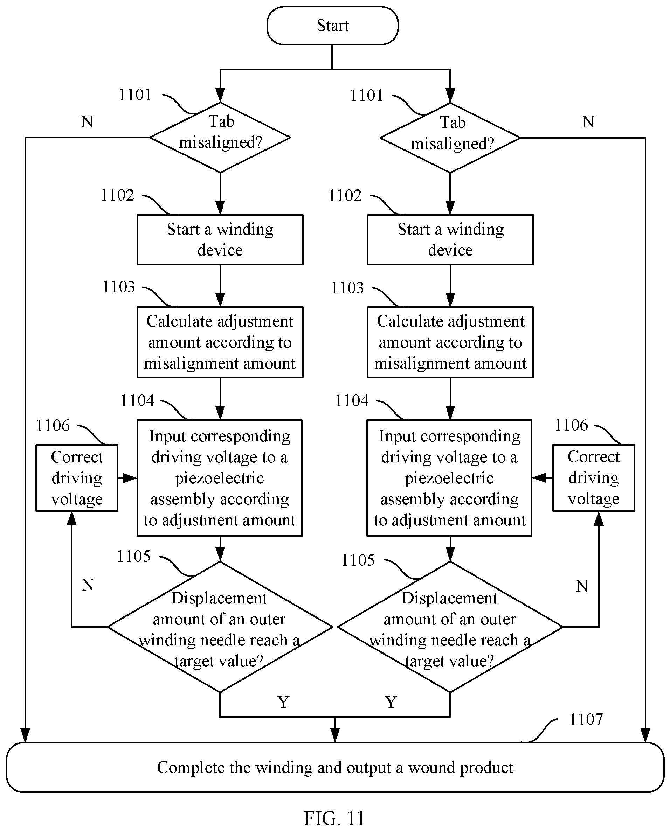

For example, as shown in a flowchart of a possible specific implementation of the winding method 200 in FIG. 11. FIG. 11 takes the control of two winding mechanisms 1 as an example. The two winding mechanisms operate in parallel and relatively independently, thereby allowing the circumferences of their respective outer winding needles 12 to be independently adjusted according to the detection results of the electrode plates being wound.

As shown in FIG. 11, Step 1101: Obtain a detection result of the tab and determine whether the tab is misaligned. If misalignment occurs, proceed to step 1102. If no misalignment occurs, maintain the circumference of the outer winding needle 12 unchanged until the winding is completed.

Step 1102: Start the winding device 100.

Step 1103: Calculate an adjustment amount of the circumference of the outer winding needle 12 according to the misalignment amount of the tab.

Step 1104: Determine a magnitude of the driving voltage of the piezoelectric assembly 20 according to the adjustment amount of the circumference of the outer winding needle 12 to input the driving voltage to the piezoelectric assembly 20.

Step 1005: Detect whether the displacement of the outer winding needle 12 reaches a target value. If the displacement does not reach the target value, proceed to step 1106 until the displacement of the outer winding needle 12 reaches the target value; if the displacement reaches the target value, proceed to step 1107.

Step 1106: Correct the driving voltage of the piezoelectric assembly 20 according to a difference between the displacement of the outer winding needle 12 and the target value.

Step 1107: Complete the winding and output a wound product to obtain the electrode assembly.

It should be understood that for specific details of the winding method 200, reference can be made to the description of the winding device 100 above. For brevity, details are not described here again.

The winding device 100 and the winding method 200 of the embodiments of this application can achieve simultaneous winding of multiple electrode plates to form multiple electrode assemblies and independently control the misalignment conditions of tabs on each electrode plate during the winding process, greatly improving winding efficiency and reducing production costs. In addition, since the piezoelectric assembly, rather than a complex mechanical structure, is utilized to control the radial movement of the winding needle, the structure of the winding device is simplified and its size is reduced, the cost is reduced, and the risk of particles caused by mechanical friction falling into the electrode assembly and piercing the separator is prevented, ensuring the safety of the electrode assembly.

It should be noted that in absence of conflicts, various embodiments described in this application and/or the technical features in the various embodiments may be combined with each other. The technical solutions obtained after combination should also fall within the protection scope of this application.

Persons of ordinary skill in the art will appreciate that the units and algorithm steps of various examples described with reference to the embodiments disclosed in this specification can be implemented by using electronic hardware, or a combination of computer software and electronic hardware. Whether these functions are executed by hardware or software depends on the particular applications and design constraints of the technical solutions. Persons skilled in the art can use different methods to implement the described functions for each particular application, but such implementations should not be construed as going beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely illustrative. For example, the unit division is merely logical function division and other division manners may be used in actual implementation. For example, multiple units or components may be combined or integrated into another system, or some features may be ignored or not be performed. In addition, the displayed or discussed mutual couplings or direct couplings or communications connections may be implemented by using some interfaces. The indirect couplings or communications connections between apparatuses or units may be implemented in electrical, mechanical, or other forms.

The units described as separate parts may or may not be physically separate. Parts displayed as units may or may not be physical units, t meaning they may be located in one position or distributed on multiple network units. Some or all of the units may be selected depending on actual requirements to achieve the objectives of the solutions of the embodiments.

## Claims

1. A winding device, **characterized in that** the winding device comprises a winding mechanism configured to wind an electrode plate to form an electrode assembly, wherein the winding mechanism comprises:
a winding needle assembly, comprising an inner winding needle and an outer winding needle surrounding the inner winding needle; and
a piezoelectric assembly, disposed between the outer winding needle and the inner winding needle and configured to control the outer winding needle to move relative to the inner winding needle to adjust a circumference of the outer winding needle.

2. The winding device according to claim 1, wherein the outer winding needle comprises a first sub-outer needle and a second sub-outer needle disposed opposite each other, and the inner winding needle comprises a first sub-inner needle and a second sub-inner needle disposed opposite each other, the first sub-outer needle surrounding the first sub-inner needle, and the second sub-outer needle surrounding the second sub-inner needle;
wherein the piezoelectric assembly is configured to control the first sub-outer needle and the second sub-outer needle to move in opposite directions to adjust a distance between the first sub-outer needle and the second sub-outer needle.

3. The winding device according to claim 2, wherein a movement distance, L, of each of the first sub-outer needle and the second sub-outer needle and an adjustment amount, ΔC, of the circumference of the outer winding needle meet: ΔC = K * L, where K is a predetermined coefficient.

4. The winding device according to claim 3, wherein the first sub-outer needle and the second sub-outer needle are symmetrical structures, and K = 4.

5. The winding device according to any one of claims 2 to 4, wherein the first sub-outer needle is fixed to a piezoelectric assembly between the first sub-outer needle and the first sub-inner needle, and the second sub-outer needle is fixed to a piezoelectric assembly between the second sub-outer needle and the second sub-inner needle.

6. The winding device according to any one of claims 2 to 5, wherein the piezoelectric assembly between the first sub-outer needle and the first sub-inner needle is fixed to the first sub-inner needle, and the piezoelectric assembly between the second sub-outer needle and the second sub-inner needle is fixed to the second sub-inner needle.

7. The winding device according to any one of claims 2 to 6, wherein elastic assemblies are respectively connected between the first sub-outer needle and the first sub-inner needle, and between the second sub-outer needle and the second sub-inner needle.

8. The winding device according to claim 7, wherein the elastic assembly comprises a screw and a spring sleeved on the screw, wherein an end of the screw close to a head is provided with a gasket, and an end of the screw close to a tail is provided with a bushing.

9. The winding device according to any one of claims 2 to 8, wherein flat plates are respectively disposed between the first sub-outer needle and the first sub-inner needle, and between the second sub-outer needle and the second sub-inner needle, wherein the flat plate is configured to increase an acting area of the piezoelectric assembly on the first sub-outer needle and the second sub-outer needle.

10. The winding device according to any one of claims 2 to 9, wherein the winding mechanism further comprises:
an inner clamping needle, comprising a first portion surrounded by the first sub-inner needle and a second portion surrounded by the second sub-inner needle, wherein a gap is formed between the first portion and the second portion, the inner clamping needle being configured to fix a separator passing through the gap.

11. The winding device according to any one of claims 1 to 10, wherein multiple winding mechanisms are provided, wherein the multiple winding mechanisms are coaxially arranged and spaced apart and configured to wind multiple electrode plates simultaneously, and the multiple winding mechanisms share the same inner winding needle and inner clamping needle.

12. The winding device according to claim 11, wherein multiple piezoelectric assemblies in the multiple winding mechanisms are respectively configured to independently adjust the circumferences of multiple outer winding needles in the multiple winding mechanisms.

13. The winding device according to any one of claims 1 to 12, wherein the winding device further comprises:
an electric slip ring, configured to provide a lead for connecting the piezoelectric assembly to an external circuit, the lead comprising an input line and an output line, wherein the input line is configured to connect to the external circuit, and the output line is configured to connect to a wire of the piezoelectric assembly; and the external circuit applies a driving voltage to the piezoelectric assembly through the lead and the wire.

14. The winding device according to any one of claims 1 to 13, wherein the winding mechanism further comprises:
a displacement monitoring device, configured to monitor a displacement of the outer winding needle to perform closed-loop control of the piezoelectric assembly.

15. The winding device according to claim 14, wherein the displacement monitoring device comprises a displacement sensing piece and a displacement sensor, wherein the displacement sensing piece is fixed to the outer winding needle, and the displacement sensor is configured to emit a signal to irradiate the displacement sensing piece and determine a displacement of the outer winding needle according to strength of a signal returned.

16. The winding device according to any one of claims 1 to 15, wherein the winding device further comprises:
a misalignment detection device, configured to detect an actual angle value of a tab of an electrode plate to be wound, wherein a difference between the actual angle value and a standard angle value corresponding to the tab is used to determine a misalignment amount of the tab, enabling the winding mechanism to adjust the circumference of the outer winding needle according to the misalignment amount, and the actual angle value is an angle through which the winding mechanism rotates when the tab reaches the winding mechanism.

17. The winding device according to any one of claims 1 to 16, wherein the winding device further comprises:
a thickness detection device, configured to detect a thickness of the electrode plate to be wound and the separator, enabling the winding mechanism to adjust the circumference of the outer winding needle according to the thickness.

18. A winding method, **characterized in that** the winding method is configured to control a winding mechanism in the winding device according to any one of claims 1 to 17 to wind an electrode plate to form an electrode assembly, the winding method comprising:
obtaining a detection result of the electrode plate;
determining adjustment information of an outer winding needle in the winding mechanism according to the detection result, the adjustment information comprising an adjustment amount and/or adjustment direction of a circumference of the outer winding needle; and
determining a driving voltage of a piezoelectric assembly in the winding mechanism according to the adjustment information.

19. The winding method according to claim 18, wherein a correction amount for a tab in an M-th layer of the electrode assembly is: Cm = M * ΔC, where ΔC is an adjustment amount of the circumference of the outer winding needle, and Cm is the correction amount.

20. The winding method according to claim 18 or 19, wherein the winding method further comprises:
obtaining a displacement of the outer winding needle; and
adjusting the driving voltage according to a difference between the displacement and a target value until the displacement of the outer winding needle equals the target value.

21. The winding method according to any one of claims 18 to 20, wherein the detection result comprises: a misalignment amount of a tab; and/or a thickness of the electrode plate and a separator.
